# FASCICULE DE BREVET EUROPEEN

(11) **EP 2 935 138 B1**
(45) Date de publication et mention de la délivrance du brevet: **28.04.2021**
(21) Numéro de dépôt: 13821881.3
(22) Date de dépôt: 20.12.2013
(51) Int. Cl.: C03C 13/06, C03B 5/027, C03C 3/062, C03C 3/064, C03C 3/087, C03C 3/091, C03C 3/097

(54) **PROCEDE DE FABRICATION DE VERRE PAR FUSION ELECTRIQUE**
VERFAHREN ZUR HERSTELLUNG VON GLASS DURCH ELEKTRISCHES SCHMELZEN
GLASS MANUFACTURING METHOD USING ELECTRIC MELTING

(30) Priorité: 21.12.2012 FR 1262642
(43) Date de publication de la demande: 28.10.2015
(73) Titulaire: SAINT-GOBAIN ISOVER, 92400 Courbevoie (FR)
(72) Inventeur: CLATOT, Richard, F-60700 Fleurines (FR); MAUGENDRE, Stéphane, F-60460 Precy sur Oise (FR)
(74) Mandataire: Saint-Gobain Recherche
(86) Numéro de dépôt international: PCT/FR2013/053223
(87) Numéro de publication internationale: WO 2014/096737

(56) Documents cités:
- WO-A2-2012/083334
- US-A- 3 928 049
- US-A- 4 376 598
- US-A- 5 188 649
- US-A- 5 346 864
- US-A- 5 935 885
- US-A- 6 001 494
- US-A1- 2008 191 179
- G. H. BEALL ET AL.: "Basalt Glass Ceramics", BULL. AM. CERAM. SOC., vol. 55, no. 6, juin 1976 (1976-06), pages 579-582, XP001277621,

## Description

L'invention se rapporte au domaine de la fusion du verre. Elle concerne plus précisément la fusion électrique de verre destiné à être transformé en laine minérale par fibrage.

Par « fusion électrique », on entend que le verre est fondu par effet Joule, au moyen d'électrodes immergées dans le bain de verre, généralement à l'exclusion de toute utilisation d'autres moyens de chauffage, tels que des flammes. Le bain de verre fondu est maintenu dans une cuve constituée de blocs réfractaires. Dans le cadre d'un procédé de fusion continu, on alimente le four en épandant à la surface du bain de verre un mélange de matières premières vitrifiable, sous forme de matières pulvérulentes, qui forme une croûte en surface du bain de verre. Sous l'effet de la chaleur générée par effet Joule, les matières subissent des réactions de fusion et réagissent entre elles pour former du verre fondu.

Les inventeurs ont pu mettre en évidence que dans le cas de la fusion de verres contenant une quantité élevée d'oxyde de fer, l'apport dans le mélange vitrifiable d'un porteur de manganèse oxydé permettait de manière surprenante de réduire considérablement la température du verre dans le four en conservant la même tirée. La durée de vie des fours et des électrodes s'en trouve grandement rallongée.

US 5346864 décrit un procédé d'élaboration d'un verre, obtenu par fusion d'un mélange de matières vitrifiables, selon lequel on règle au niveau désiré son degré d'oxydoréduction. Le degré d'oxydation est réglé par ajout d'un nitrate inorganique et d'un composé de manganèse oxydé à un degré d'oxydation supérieur à 2.

L'invention a pour objet un procédé de fabrication d'un verre dont la composition chimique comprend au moins 3% en poids d'oxyde de fer, exprimé sous la forme Fe₂O₃, comprenant une étape de fusion électrique au moyen d'électrodes immergées dans le verre fondu d'un mélange de matières premières vitrifiable contenant au moins un porteur de manganèse dans lequel le manganèse est dans un état d'oxydation supérieur à +2.

Le procédé selon l'invention est de préférence tel qu'après l'étape de fusion le verre est mis en forme de laine minérale lors d'une étape de fibrage.

Il est décrit une laine minérale comprenant des fibres de verre présentant une composition chimique comprenant les constituants suivants dans les limites définies ci-après exprimées en pourcentages pondéraux :

| | |
|---|---|
| SiO₂ | 35-55%, notamment 39-48% |
| Al₂O₃ | 14-27%, notamment 16-27% |
| CaO | 3-35%, notamment 5-20% |
| MgO | 0-15%, notamment 0-5% |
| Na₂O+K₂O | 1-17%, notamment 9-15% |
| Fe₂O₃ | 3-15%, notamment 3-10% |
| B₂O₃ | 0-8%, notamment 0% |
| P₂O₅ | 0-3%, notamment 0-1% |
| TiO₂ | 0-2%, notamment 0-1%. |
| MnO₂ | 0,4-2%, notamment 0,5-1%. |

Dans la totalité du texte, les teneurs sont exprimées en pourcentages pondéraux.

La composition chimique du verre comprend de préférence une teneur pondérale en oxyde de fer, exprimée sous la forme Fe₂O₃, d'au moins 4%, voire 5% et/ou d'au plus 15%, notamment 10% et même 9% ou encore 8%. Le verre est de préférence un aluminosilicate d'alcalins et d'alcalino-terreux.

Si l'on exprime la teneur (totale) en oxyde de fer sous la forme Fe₂O₃, cela ne signifie pas que cet oxyde de fer est nécessairement et exclusivement présent dans le verre sous la forme ferrique. Le verre contient généralement l'oxyde de fer à la fois sous ses formes ferrique (Fe₂O₃) et ferreuse (FeO), et c'est par pure convention que l'on désigne par Fe₂O₃ la teneur totale en oxyde de fer. Il en est de même pour l'oxyde de manganèse, l'expression « MnO₂ » ne préjugeant pas des degrés d'oxydation des ions manganèse dans le verre.

La composition chimique du verre comprend de préférence les constituants suivants, dans les limites exprimées en pourcentages pondéraux définies dans le tableau 1 ci-après. Les chiffres apparaissant dans les colonnes du tableau définissent des gammes de plus en plus préférées pour chaque constituant. En combinaison, ces gammes définissent des compositions de plus en plus préférées notées A, B et C. Il est toutefois bien entendu que chacune des gammes d'une de ces compositions peut être combinée avec toute autre gamme appartenant à une autre composition.

**Tableau 1**

| | A | B | C |
|---|---|---|---|
| SiO₂ | 35-55% | 39-48% | 40-45% |
| Al₂O₃ | 14-27% | 16-27% | 18-26% |
| CaO | 3-35% | 5-20% | 8-18% |
| MgO | 0-15% | 0-5% | 0,5-3% |
| Na₂O+K₂O | 1-17% | 9-15% | 10-13% |
| Fe₂O₃ | 3-15% | 3-10% | 4-8% |
| B₂O₃ | 0-8% | 0-2% | 0 |
| P₂O₅ | 0-3% | 0-1% | 0-0,5% |
| TiO₂ | 0-2% | 0-1% | 0,1-1% |

Du fait de l'introduction d'un porteur de manganèse, la composition chimique du verre obtenu par le procédé selon l'invention, et en particulier pour les compositions A, B, C ci-dessus, comprend également de l'oxyde de manganèse. La teneur pondérale en MnO₂ dans le verre est de préférence d'au moins 0,05%, notamment 0,1%, voire 0,2% et même 0,3%. Cette teneur est avantageusement comprise dans un domaine allant de 0,4 à 2%, notamment de 0,5 à 1%.

Ces compositions sont particulièrement bien adaptées à la mise en forme du verre sous forme de laines minérales.

La somme des teneurs en silice et alumine est de préférence comprise entre 57 et 70%, notamment entre 62 et 68%. La teneur en alumine est de préférence comprise dans un domaine allant de 20 à 25%, notamment de 21 à 24%.

La teneur en silice est avantageusement comprise dans un domaine allant de 40 à 44%.

La teneur en magnésie est avantageusement d'au plus 3%, voire 2,5%, afin de minimiser la température au liquidus, et donc la température de fibrage, de manière à optimiser la durée de vie des centrifugeurs.

La teneur en chaux est de préférence comprise dans un domaine allant de 10 à 17%, notamment de 12 à 16%. La somme des teneurs en chaux et magnésie est quant à elle de préférence comprise dans un domaine allant de 14 à 20%, notamment de 15 à 18%. De préférence, la teneur en oxyde de baryum est d'au plus 1%, notamment 0,5%. La teneur en oxyde de strontium est quant à elle de préférence d'au plus 1%, voire 0,5% et même 0,1% ou encore nulle.

La teneur totale en oxydes alcalins (soude et potasse) est de préférence d'au plus 13%, voire 12%. La teneur en Na₂O est avantageusement comprise dans un domaine allant de 4 à 9%, notamment de 5 à 8%, tandis que la teneur en K₂O est avantageusement comprise dans un domaine allant de 3 à 6%.

L'oxyde de fer a un impact positif sur la nucléation et la croissance de germes à basse température, et donc sur la tenue en température de la laine minérale, tout en ne pénalisant pas la température au liquidus. Sa teneur totale (exprimée sous la forme Fe₂O₃, que le fer soit sous forme ferrique ou ferreuse) est de préférence d'au moins 4%, voire 5% et/ou d'au plus 7% ou 6%.

P₂O₅ peut être utilisé, à des teneurs comprises entre 0 et 3 %, notamment entre 0,1 et 1,2 % pour augmenter la biosolubilité des fibres à pH neutre. L'oxyde de titane procure un effet très sensible sur la nucléation à haute et à basse température de spinelles dans la matrice vitreuse. Une teneur de l'ordre de 1 % ou moins peut se révéler avantageuse.

De préférence, la teneur totale en SiO₂, Al₂O₃, CaO, MgO, Na₂O, K₂O, Fe₂O₃ (fer total) est d'au moins 90%, notamment 95% et même 97 ou 98%.

La description détaillée de la composition de verre qui précède, y compris les compositions préférées A, B et C, s'applique aussi bien à la composition du verre fondu (dans le four) qu'à la composition finale du verre, et notamment de la laine minérale obtenue avec le procédé selon l'invention.

Ces compositions, en particulier les compositions B et C, sont notamment bien adaptées au procédé de fibrage par centrifugation interne, avec une viscosité à la température de 1400°C généralement de plus de 40 poises, notamment de l'ordre de 50 à 100 poises (1 poise = 0,1 Pa.s).

Ces compositions présentent des températures de transition vitreuse élevées, notamment supérieures à 600°C, en particulier supérieures ou égales à 650°C. Leur température supérieure de recuisson (annealing point) est généralement largement supérieure à 600°C, notamment de l'ordre de 670°C ou plus, souvent de 700°C ou plus.

L'étape de fibrage est de préférence réalisée par centrifugation interne, par exemple selon l'enseignement de la demande WO 93/02977. Les compositions, en particulier B et C, sont en effet bien adaptées à ce mode de fibrage, leurs paliers de travail (correspondant à la différence entre la température à laquelle le logarithme décimal de la viscosité vaut 2,5 et la température au liquidus) étant généralement d'au moins 50°C, voire 100°C et même 150°C. Les températures au liquidus sont peu élevées, généralement d'au plus 1200°C, voire 1150°C, et compatibles avec l'utilisation de centrifugeurs. Le procédé de centrifugation interne met en œuvre des centrifugeurs, aussi appelés assiettes de fibrage, tournant à grande vitesse et percés d'orifices à leur périphérie. Le verre fondu est acheminé par gravité au centre du centrifugeur, et, sous l'effet de la force centrifuge, est éjecté au travers des orifices pour former des filets de verre, lesquels sont étirés vers le bas par des jets de gaz chauds émis par des brûleurs.

L'étape de fibrage peut également être réalisée par centrifugation externe, en particulier pour les compositions de type A. Dans ce procédé, le verre fondu est déversé sur la périphérie de rotors tournant à grande vitesse.

Après fibrage, les fibres obtenues sont liées entre elles à l'aide d'une composition d'encollage pulvérisée à leur surface, avant d'être réceptionnées et mises en forme pour donner divers produits de laine minérales, comme des rouleaux ou des panneaux.

Le ou chaque porteur de manganèse est de préférence choisi parmi MnO₂, Mn₃O₄, Mn₂O₃, Mn₂O₇, les permanganates, notamment de sodium, de potassium ou encore de calcium ou de magnésium ou l'un quelconque de leurs mélanges. Les porteurs de manganèse contiennent généralement du manganèse à l'état d'oxydation +3 ou +4, voire +6 ou +7. Les porteurs de manganèse peuvent notamment être apportés par les minéraux suivants : pyrolusite (MnO₂), hausmannite (Mn₃O₄), bixbyite (Mn₂O₃), birnessite ((Na, Ca, K) ₓMn₂O₄.H₂O) .

La quantité totale de porteur de manganèse contenu dans le mélange de matières premières vitrifiable est avantageusement telle qu'une tonne dudit mélange sec comprend entre 1 et 20 kg, notamment entre 2 et 10 kg, de préférence entre 4 et 8 kg de manganèse dans un état d'oxydation supérieur à +2, exprimé sous la forme MnO₂. La quantité de manganèse oxydé est de préférence adaptée en fonction de la quantité de réducteurs contenus dans le mélange vitrifiable, par exemple les impuretés organiques.

De préférence, le mélange vitrifiable ne contient pas de nitrate, notamment pas de nitrate inorganique.

Le mélange vitrifiable comprend généralement des matières choisies parmi les porteurs de silice, de préférence le sable, les porteurs d'alumine (bauxite, phonolithe, feldspaths, néphéline, syénite néphélinique, laitier de haut fourneau, basalte), le calcaire, la dolomie. Le mélange vitrifiable comprend également de préférence du calcin, c'est-à-dire du verre déjà formé, recyclé ou non.

Le four comprend normalement une cuve constituée d'une sole et de parois latérales. La cuve peut comprendre des matériaux réfractaires et/ou des matériaux métalliques. Les matériaux réfractaires sont par exemple en oxyde de chrome ou à base de cet oxyde, qui présente une bonne résistance à la corrosion par le verre fondu. Lorsque la cuve contient des matériaux métalliques, elle est avantageusement composée de water-jackets, c'est-à-dire de de doubles enveloppes métalliques dans lesquelles circule un fluide de refroidissement, typiquement de l'eau. Les water-jackets peuvent être garnis de matériaux réfractaires en contact verre, ou non, auquel cas le verre est en contact direct avec une enveloppe du water-jacket.

Les électrodes sont immergées dans le verre fondu. Elles peuvent être suspendues de manière à plonger dans le bain de verre par le dessus, être installées dans la sole, ou encore être installées dans les parois latérales de la cuve. Les deux premières options sont généralement préférées pour les cuves de grandes dimensions afin de répartir au mieux le chauffage du bain de verre.

Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

Outre la cuve, le four peut comprendre, ou ne pas comprendre, une superstructure. Le mélange vitrifiable est normalement réparti de manière homogène sur la surface du bain de verre à l'aide d'un dispositif mécanique, et constitue ainsi un écran thermique limitant la température au-dessus du bain de verre, si bien que la présence d'une superstructure n'est pas toujours nécessaire.

Pendant l'étape de fusion la température du verre, mesurée au contact des réfractaires de cuve et au point le plus chaud, est de préférence comprise dans un domaine allant de 1400 à 1700°C, notamment de 1450 à 1680°C et même de 1500 à 1650°C, ou encore de 1500 à 1600°C. C'est en effet dans cette gamme de températures que l'effet bénéfique du manganèse oxydé se manifeste avec le plus d'intensité.

L'exemple qui suit illustre l'invention sans toutefois la limiter.

Dans un four comprenant une cuve constituée d'une sole et de parois latérales formées de réfractaires en oxyde de chrome, munie de trois électrodes en molybdène immergées dans le bain de verre, on a fondu un verre présentant la composition pondérale suivante :

| | |
|---|---|
| SiO₂ | 42,7% |
| Al₂O₃ | 21,7% |
| Fe₂O₃ | 5,8% |
| CaO | 14,8% |
| MgO | 2,4% |
| Na₂O | 6,2% |
| K₂O | 5,0%. |

Pour ce faire, le mélange vitrifiable était constitué (en poids sec, et pour une tonne de verre final), de 838 kg de phonolithe, de 95 kg de calcaire, de 80 kg de bauxite, de 57 kg de dolomie, de 23 kg de carbonate de sodium, et de 20 kg d'oxyde de fer.

Une tonne de ce mélange (sec) contenait en outre 6 kg d'un dioxyde de manganèse (état d'oxydation +4) ayant une pureté de 62%, soit une quantité de l'ordre de 4 kg de MnO₂.

Dans un régime de production stabilisé, avec une tirée de 6 tonnes/jour, la température du verre, mesurée à l'aide d'un thermocouple au contact des réfractaires de cuve, était de 1590°C. La température mesurée directement sous la croûte, était d'environ 1400°C, sur une large zone s'étendant de la proximité des électrodes (50 mm) à la proximité des réfractaires de cuve.

Des résultats analogues ont été obtenus en utilisant Mn₂O₃ comme porteur de manganèse oxydé (état d'oxydation +3).

A fins de comparaison, on a ensuite supprimé le porteur de manganèse oxydé du mélange vitrifiable. Dans un régime stabilisé, avec une même tirée de 6 tonnes/jour, la température maximale au contact des réfractaires de cuve était de 1660°C. La température sous la croûte variait quant à elle entre 1200 et 1300°C.

Des résultats similaires en termes de température au contact des réfractaires de cuve ont été obtenus lors d'essais mettant en œuvre l'ajout dans le mélange vitrifiable d'oxyde de manganèse MnO (état d'oxydation +2), apporté par le biais d'un porteur d'alumine.

Les températures mesurées à proximité des électrodes étaient quant à elle d'environ 100 à 150°C plus faibles lorsque le mélange vitrifiable comprenait un porteur de manganèse oxydé (état d'oxydation supérieur à 2) par rapport aux essais de référence dans lesquels le mélange vitrifiable soit ne contenait pas d'oxyde de manganèse, soit contenait un porteur de MnO (état d'oxydation de 2).

Grâce à l'ajout d'un porteur de manganèse oxydé, la teneur en impuretés de chrome et de molybdène dans le verre final a été réduite d'un facteur respectivement 10 et 2, témoignant de la plus faible usure des réfractaires et des électrodes.

L'introduction d'un porteur de manganèse oxydé a donc permis de réduire très significativement la température du bain de verre, notamment au contact des réfractaires et des électrodes, et donc l'usure de ces derniers, tout en conservant la même tirée.

Les gains apportés par l'invention en termes de durée de vie des fours sont donc considérables.

## Revendications

1. Procédé de fabrication d'un verre dont la composition chimique comprend au moins 3% en poids d'oxyde de fer, exprimé sous la forme Fe₂O₃, comprenant une étape de fusion électrique au moyen d'électrodes immergées dans le verre fondu d'un mélange de matières premières vitrifiable **caractérisé en ce que** ledit mélange de matières premières vitrifiable contient au moins un porteur de manganèse dans lequel le manganèse est dans un état d'oxydation supérieur à +2.

2. Procédé selon la revendication 1, tel que la composition chimique du verre comprend les constituants suivants, dans les limites ci-après définies exprimées en pourcentages pondéraux :
| | |
|---|---|
| SiO₂ | 35-55%, notamment 39-48% |
| Al₂O₃ | 14-27%, notamment 16-27% |
| CaO | 3-35%, notamment 5-20% |
| MgO | 0-15%, notamment 0-5% |
| Na₂O+K₂O | 1-17%, notamment 9-15% |
| Fe₂O₃ | 3-15%, notamment 3-10% |
| B₂O₃ | 0-8%, notamment 0% |
| P₂O₅ | 0-3%, notamment 0-1% |
| TiO₂ | 0-2%, notamment 0-1%. |

3. Procédé selon l'une des revendications précédentes, tel que le ou chaque porteur de manganèse est choisi parmi MnO₂, Mn₃O₄, Mn₂O₃, Mn₂O₇, les permanganates, notamment de sodium, de potassium ou encore de calcium ou de magnésium, ou l'un quelconque de leurs mélanges.

4. Procédé selon l'une des revendications précédentes, dans lequel la quantité totale de porteur de manganèse contenu dans le mélange de matières premières vitrifiable est telle qu'une tonne dudit mélange sec comprend entre 1 et 20 kg, notamment entre 2 et 10 kg, de manganèse dans un état d'oxydation supérieur à +2, exprimé sous la forme MnO₂.

5. Procédé selon l'une des revendications précédentes, tel que le mélange vitrifiable ne contient pas de nitrate.

6. Procédé selon l'une des revendications précédentes, tel que les électrodes sont en molybdène.

7. Procédé selon l'une des revendications précédentes, tel que pendant l'étape de fusion la température du verre, mesurée au contact des réfractaires de cuve et au point le plus chaud, est comprise dans un domaine allant de 1400 à 1650°C.

8. Procédé selon l'une des revendications précédentes, tel qu'après l'étape de fusion le verre est mis en forme de laine minérale lors d'une étape de fibrage.

9. Procédé selon la revendication 8, **caractérisé en ce que** la laine minérale comprend des fibres de verre présentant une composition chimique comprenant les constituants suivants dans les limites définies ci-après exprimées en pourcentages pondéraux :
| | |
|---|---|
| SiO₂ | 35-55% |
| Al₂O₃ | 14-27% |
| CaO | 3-35% |
| MgO | 0-15% |
| Na₂O+K₂O | 1-17% |
| Fe₂O₃ | 3-15% |
| B₂O₃ | 0-8% |
| P₂O₅ | 0-3% |
| TiO₂ | 0-2% |
| MnO₂ | 0,4-2%. |

10. Procédé selon la revendication 8, **caractérisé en ce que** la laine minérale comprend des fibres de verre présentant une composition chimique comprenant les constituants suivants dans les limites définies ci-après exprimées en pourcentages pondéraux :
| | |
|---|---|
| SiO₂ | 39-48% |
| Al₂O₃ | 16-27% |
| CaO | 5-20% |
| MgO | 0-5% |
| Na₂O+K₂O | 9-15% |
| Fe₂O₃ | 3-10% |
| B₂O₃ | 0% |
| P₂O₅ | 0-1% |
| TiO₂ | 0-1% |
| MnO₂ | 0,5-1%. |

## Patentansprüche

1. Verfahren zur Herstellung von Glas, von dem die chemische Zusammensetzung mindestens 3 Gew.-% Eisenoxid, ausgedrückt als Fe₂O₃, umfasst, umfassend einen Schritt des elektrischen Schmelzens einer Mischung von verglasbaren Ausgangsmaterialien mittels in das geschmolzene Glas eingetauchten Elektroden, **dadurch gekennzeichnet, dass** die Mischung von verglasbaren Ausgangsmaterialien mindestens einen Manganträger enthält, wobei das Mangan in einer Oxidationsstufe höher als +2 vorliegt.

2. Verfahren nach Anspruch 1, wobei die chemische Zusammensetzung des Glases die folgenden Bestandteile in den hiernach definierten, in Gewichtsprozentsätzen ausgedrückten Grenzwerten umfasst:
| | |
|---|---|
| SiO₂ | 35-55 %, insbesondere 39-48 % |
| Al₂O₃ | 14-27 %, insbesondere 16-27 % |
| CaO | 3-35 %, insbesondere 5-20 % |
| MgO | 0-15 %, insbesondere 0-5 % |
| Na₂O + K₂O | 1-17 %, insbesondere 9-15 % |
| Fe₂O₃ | 3-15 %, insbesondere 3-10 % |
| B₂O₃ | 0-8 %, insbesondere 0 % |
| P₂O₅ | 0-3 %, insbesondere 0-1 % |
| TiO₂ | 0-2 %, insbesondere 0-1 %. |

3. Verfahren nach einem der vorstehenden Ansprüche, wobei der oder jeder Manganträger ausgewählt ist aus MnO₂, Mn₃O₄, Mn₂O₃, Mn₂O₇, Permanganaten, insbesondere von Natrium, von Kalium oder auch von Calcium oder von Magnesium, oder einer beliebigen von deren Mischungen.

4. Verfahren nach einem der vorstehenden Ansprüche, wobei die Gesamtmenge des in der Mischung aus verglasbaren Ausgangsmaterialien enthaltenen Manganträgers derart ist, dass eine Tonne der trockenen Mischung zwischen 1 und 20 kg, insbesondere zwischen 2 und 10 kg, Mangan in einer Oxidationsstufe höher als +2, ausgedrückt als MnO₂, umfasst.

5. Verfahren nach einem der vorstehenden Ansprüche, wobei die verglasbare Mischung kein Nitrat enthält.

6. Verfahren nach einem der vorstehenden Ansprüche, wobei die Elektroden aus Molybdän bestehen.

7. Verfahren nach einem der vorstehenden Ansprüche, wobei während des Schmelzschritts die Temperatur des Glases, gemessen in Kontakt mit den Feuerfestmaterialien der Wanne und am wärmsten Punkt, in einem Bereich von 1.400 bis 1.650 °C liegt.

8. Verfahren nach einem der vorstehenden Ansprüche, wobei das Glas nach dem Schmelzschritt bei einem Zerfaserungsschritt in Mineralwolleform gebracht wird.

9. Verfahren nach Anspruch 8, **dadurch gekennzeichnet, dass** die Mineralwolle Glasfasern umfasst, die eine chemische Zusammensetzung aufweisen, umfassend die folgenden Bestandteile in den hiernach definierten, in Gewichtsprozentsätzen ausgedrückten Grenzwerten:
| | |
|---|---|
| SiO₂ | 35-55 % |
| Al₂O₃ | 14-27 % |
| CaO | 3-35 % |
| MgO | 0-15 % |
| Na₂O + K₂O | 1-17 % |
| Fe₂O₃ | 3-15 % |
| B₂O₃ | 0-8 % |
| P₂O₅ | 0-3 % |
| TiO₂ | 0-2 % |
| MnO₂ | 0,4-2 % |

10. Verfahren nach Anspruch 8, **dadurch gekennzeichnet, dass** die Mineralwolle Glasfasern umfasst, die eine chemische Zusammensetzung aufweisen, umfassend die folgenden Bestandteile in den hiernach definierten, in Gewichtsprozentsätzen ausgedrückten Grenzwerten:
| | |
|---|---|
| SiO₂ | 39-48 % |
| Al₂O₃ | 16-27 % |
| CaO | 5-20 % |
| MgO | 0-5 % |
| Na₂O + K₂O | 9-15 % |
| Fe₂O₃ | 3-10% |
| B₂O₃ | 0% |
| P₂O₅ | 0-1 % |
| TiO₂ | 0-1 % |
| MnO₂ | 0,5-1 %. |

## Claims

1. A process for manufacturing a glass, the chemical composition of which comprises at least 3% by weight of iron oxide, expressed in the form Fe₂O₃, comprising a step of electric melting, using electrodes submerged in the molten glass, of a vitrifiable batch material mixture, **characterized in that** said vitrifiable batch material mixture contains at least one manganese carrier wherein the manganese is in an oxidation state higher than +2.

2. The process as claimed in claim 1, such that the chemical composition of the glass comprises the following constituents, within the limits defined below expressed as weight percentages:
| | |
|---|---|
| SiO₂ | 35-55%, in particular 39-48% |
| Al₂O₃ | 14-27%, in particular 16-27% |
| CaO | 3-35%, in particular 5-20% |
| MgO | 0-15%, in particular 0-5% |
| Na₂O+K₂O | 1-17%, in particular 9-15% |
| Fe₂O₃ | 3-15%, in particular 3-10% |
| B₂O₃ | 0-8%, in particular 0% |
| P₂O₅ | 0-3%, in particular 0-1% |
| TiO₂ | 0-2%, in particular 0-1%. |

3. The process as claimed in either of the preceding claims, such that the or each manganese carrier is selected from MnO₂, Mn₃O₄, Mn₂O₃, Mn₂O₇, permanganates, in particular of sodium, of potassium or else of calcium or of magnesium, or any mixture thereof.

4. The process as claimed in one of the preceding claims, wherein the total amount of manganese carrier contained in the vitrifiable batch material mixture is such that one tonne of said dry mixture comprises between 1 and 20 kg, in particular between 2 and 10 kg, of manganese in an oxidation state higher than +2, expressed in the form MnO₂.

5. The process as claimed in one of the preceding claims, such that the vitrifiable mixture contains no nitrate.

6. The process as claimed in one of the preceding claims, such that the electrodes are made of molybdenum.

7. The process as claimed in one of the preceding claims, such that during the melting step the temperature of the glass, measured in contact with the tank refractories and at the hottest point, is within a range extending from 1400°C to 1650°C.

8. The process as claimed in one of the preceding claims, such that after the melting step the glass is formed into mineral wool during a fiberizing step.

9. The process according to claim 8, **characterized in that** the mineral wool comprises glass fibers having a chemical composition comprising the following constituents within the limits defined below expressed as weight percentages:
| | |
|---|---|
| SiO₂ | 35-55% |
| Al₂O₃ | 14-27% |
| CaO | 3-35% |
| MgO | 0-15% |
| Na₂O+K₂O | 1-17% |
| Fe₂O₃ | 3-15% |
| B₂O₃ | 0-8% |
| P₂O₅ | 0-3% |
| TiO₂ | 0-2% |
| MnO₂ | 0.4-2%. |

10. The process according to claim 8, **characterized in that** the mineral wool comprises glass fibers having a chemical composition comprising the following constituents within the limits defined below expressed as weight percentages:
| | |
|---|---|
| SiO₂ | 39-48% |
| Al₂O₃ | 16-27% |
| CaO | 5-20% |
| MgO | 0-5% |
| Na₂O+K₂O | 9-15% |
| Fe₂O₃ | 3-10% |
| B₂O₃ | 0% |
| P₂O₅ | 0-1% |
| TiO₂ | 0-1% |
| MnO₂ | 0.5-1%. |
